# EUROPEAN PATENT SPECIFICATION

(11) **EP 2 380 299 B1**
(45) Date of publication and mention of the grant of the patent: **16.12.2020**
(21) Application number: 09751950.8
(22) Date of filing: 05.10.2009
(51) Int. Cl.: H04L 1/00

(54) **MULTIPLE ACCESS METHOD AND APPARATUS**
MEHRFACHZUGANGSVERFAHREN UND VORRICHTUNG
PROCÉDÉ ET APPAREIL D'ACCÈS MULTIPLE

(30) Priority: 18.12.2008 GB 0823132
(43) Date of publication of application: 26.10.2011
(73) Proprietor: Inmarsat Global Limited, London EC1Y 1AX (GB)
(72) Inventor: FEBVRE, Paul, London EC1Y 1AX (GB); FINES, Panagiotis, London EC1Y 0SU (GB); CHRISTOFYLAKI, Ekaterina, London EC1Y 0SU (GB)
(74) Representative: Cross, James Peter Archibald
(86) International application number: PCT/GB2009/002377
(87) International publication number: WO 2010/070259

(56) References cited:
- US-A- 6 122 269
- US-A1- 2001 005 394
- US-A1- 2005 013 384
- FINES P ET AL: "Turbo-code division multiple access: capacity enhancement of mobile satellite systems using narrowband multiuser detection" SIGNAL PROCESSING FOR SPACE COMMUNICATIONS, 2008. SPSC 2008. 10TH INTERNATIONAL WORKSHOP ON, IEEE, PISCATAWAY, NJ, USA, 6 October 2008 (2008-10-06), pages 1-5, XP031365865 ISBN: 978-1-4244-2572-3
- XIAODONG WANG ET AL: "Iterative (Turbo) Soft Interference Cancellation and Decoding for Coded CDMA" IEEE TRANSACTIONS ON COMMUNICATIONS, IEEE SERVICE CENTER, PISCATAWAY, NJ, US, vol. 47, no. 7, 1 July 1999 (1999-07-01), XP011009462 ISSN: 0090-6778
- ROUMY A ET AL: "Turbo multiuser detection for coded asynchronous DS-CDMA over frequency selective channels" SPREAD SPECTRUM TECHNIQUES AND APPLICATIONS, 2000 IEEE SIXTH INTERNATI ONAL SYMPOSIUM ON 6-8 SEPTEMBER 2000, PISCATAWAY, NJ, USA,IEEE, vol. 2, 6 September 2000 (2000-09-06), pages 608-612, XP010516650 ISBN: 978-0-7803-6560-5
- MARI KOBAYASHI ET AL: "Successive Interference Cancellation With SISO Decoding and EM Channel Estimation" IEEE JOURNAL ON SELECTED AREAS IN COMMUNICATIONS, IEEE SERVICE CENTER, PISCATAWAY, US, vol. 19, no. 8, 1 August 2001 (2001-08-01) , XP011055427 ISSN: 0733-8716
- KANG H W ET AL: "AN EFFICIENT ADAPTIVE PREDISTORTER FOR NONLINEAR HIGH POWER AMPLIFIER IN SATELLITE COMMUNICATION", ISCAS '97. PROCEEDINGS OF THE 1997 IEEE INTERNATIONAL SYMPOSIUM ON CIRCUITS AND SYSTEMS. CIRCUITS AND SYSTEMS IN THE INFORMATION AGE. HONG KONG, JUNE 9 - 12, 1997; [IEEE INTERNATIONAL SYMPOSIUM ON CIRCUITS AND SYSTEMS], NEW-YORK, NY : IEEE, US, 9 June 1997 (1997-06-09), pages 2288-2291, XP000804798, ISBN: 978-0-7803-3584-4

## Description

### Field of the Invention

The present invention relates to a novel multiple access method, and to apparatus for implementing the method.

### Background of the Invention

The operational cost of low data rate mobile geostationary (GEO) satellite systems is relatively expensive when compared to fixed or transportable counterparts due to their low gain antenna, limited transmit power and extensive fading margin. For such systems more satellite resources, such as bandwidth and power, should be made available to accommodate poor propagation conditions which usually become worse as the user terminals operate at the edge of coverage, viewing the satellite at lower elevation angle (e.g. as low as 5°). One approach is to limit the service area so that only high elevation satellite links are allowed (e.g. higher than 20°) ensuring good propagation conditions, but this clearly does not satisfy the requirements for provision of services at high latitudes such as Northern European countries. One solution is to use higher gain antennas at the terminals and to include some mechanism to steer the antenna beam towards the satellite. Another solution is to design waveforms with time-diversity to provide protection against short-duration deep multipath fades but this has the disadvantage that low-latency services such as voice cannot be supported. A further solution is the use of space-diversity antenna subsystems, but while this may be suitable for some types of mobile installations, the possible applications are somewhat limited.

An example of a modern mobile satellite system is the Inmarsat (RTM) Broadband Global Access Network (BGAN) which has been deployed to provide high-speed IP data services to very compact transportable terminals using a global network of multi-beam GEO satellites at L-band. Recently, the BGAN system has been enhanced to extend the mobile terminal portfolio to include land mobile, maritime and aeronautical services such as Swiftbroadband (SBB). Inmarsat is continuously enhancing the BGAN system to support new services such as push-to-talk netted voice-over-IP and other interactive group data applications. Such applications involve bursty traffic from user to user interaction with very tight latency requirements. The low-latency of bursty traffic requirement is difficult to address efficiently using a conventional TDMA waveform such as employed in the existing BGAN air interface. New radio resource management algorithms, including modifications to the signalling and the behaviour of both Mobile Terminals and Satellite Access Stations are likely to be introduced to support such service capabilities in the near future. The introduction of extensions to the existing BGAN physical layer able to support unscheduled asynchronous transmissions from Mobile Terminals (MT) in the return link, would both minimize system complexity while enhancing system performance and capacity for such applications.

An example of mobile satellite service employing compact low gain antennas and requiring high reliability over the widest possible area is air traffic management (ATM). The forecast increase in air traffic has stimulated research into advanced satellite based systems for air traffic management. Satellite-based systems are already used for provision of aeronautical safety services in Oceanic airspace, and offer significant cost advantages as a secondary communications path to improve overall system availability for Continental airspace, but systems employing low gain antennas on the aircraft to provide higher data rates are still to be defined and the expected performance remains to be validated in an operational environment. Current systems for ATM in Oceanic airspace such as Inmarsat Aeronautical Mobile Satellite Service (AMSS) and the Japanese MTSAT employ mostly intermediate and high gain antennas which are large and expensive when small civil aircraft are considered.

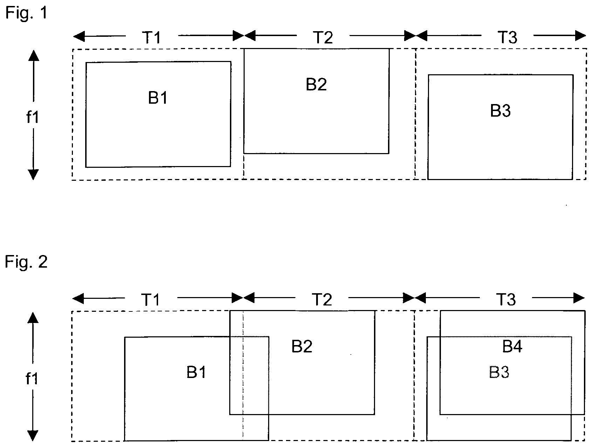

State-of-the art satellite systems such as Inmarsat BGAN and DVBS/RCS use allocation schemes which operate in both frequency and time domains (e.g. MF-TDMA) as shown in Figure 1, in which each burst B1...B3 is transmitted in a corresponding time slot T1...T3 in a frequency channel f1, to simplify the transmission, reception and operation of multiple terminal access within the same frequency band. This, however, puts organizational and computational burden on the radio network controller. The principle concern with an MF-TDMA scheme is that the energy density in the channel is largely determined by the performance of the worst-case mobile terminals that are sharing a particular communications channel at any time, as the worst-case terminal requires the highest percentage of time on the channel in order to provide a minimum quality of service.

The paper 'Turbo-coding division multiple access: capacity enhancement of mobile satellite systems using narrowband multiuser detection', Fines et. al, Signal Processing for Space Communications 2008 discloses a method and system according to the precharacterising portion of the independent claims. An example of a CDMA system where predistortion techniques are used is disclosed by the document US2005/013384, Gregoire Daniel, published on 20 January 2005.

### Statement of the Invention

According to one aspect of the invention, there is provided a method according to claim 1. According to another aspect of the invention, there is provided a system according to claim 7. The embodiments that do not fall under the scope of the claims have to be interpreted as examples useful for understanding the invention. According to embodiments of the invention, joint access to spectrum together with multi-burst decoding at the receiver can significantly increase the system capacity by increasing the energy density in the channel, while simultaneously improving service latency and reducing the overheads associated with network control functions. Complexity may be transferred from the signalling and control infrastructure into the receiver, this being equipped with enhanced signal processing techniques making possible to extract information streams from composite signals. The use of high redundancy turbo-coding technology in the return direction and the associated novel receiver architectures may be used to enhance the performance of the reserved and random-access signalling.

In contrast to the current BGAN return link, unscheduled transmissions from vehicular, maritime and aeronautical (including helicopter) terminals may reuse the satellite resources. All these terminals may use the same time and frequency slot for their transmission. The new type of Satellite Access Station (SAS) receiver processes the received composite signal from all these transmissions which are corrupted by high mutual interference and detects each transmission. Therefore, the satellite spectrum is not shared but instead is reused by a number of terminals and this feature increases dramatically the system capacity, reduces the system latency and simplifies the signalling protocols.

In contrast to a conventional DS-CDMA system, the proposed BGAN system enhancement uses highly redundant turbo coded narrowband transmissions instead of CDMA techniques and their associated spreading sequences. For this reason the proposed multiple access scheme may be referred to as a Turbo Code Division Multiple Access scheme (TCDMA) and uses narrowband multiuser detection. The TCDMA signals in space are totally compatible with the legacy BGAN system and at the same time are extremely robust against multipath fading from different mobile satellite propagation channels and interference, originating from similar transmissions which share simultaneously the same frequency channel. In contrast to the traditional CDMA, the capacity of a TCDMA system increases as the simultaneous transmissions differ in power. Therefore, there may be no need for power control signalling. Small time and frequency errors between the simultaneous transmissions and multipath fading are different for each mobile terminal helping the receiver to discriminate the various transmissions. The system capacity increases as the coding rate decreases and the-transmissions become uncoordinated. This is a significant feature of TCDMA in contrast to traditional approaches.

Another attractive feature is that robustness of each transmission increases as the traffic loading decreases and this may be provided without any involvement from signalling protocols. Therefore, the proposed TCDMA multiple access scheme is very suitable for sporadic unscheduled traffic from mobile terminals equipped with low gain antennas. Some of the benefits of TCDMA configuration are:
enhanced random access capacity: minimizes signalling delay, maximizes capacity for random access and simplifies protocols for sporadic transmissions;
enhanced user traffic capacity: scheduled and unscheduled user traffic can share return slots;
reduction of signalling latency: signalling protocols that introduce considerable latency due to the satellite round trip may be avoided; and
simplification of network protocols: since slots can be shared, less radio resource reservation and signalling are necessary.

The complexity of a multi-burst receiver is significantly higher than that of a single channel receiver. Complexity is transferred into the receiver incorporating new functions which can extract information from a composite signal. The complexity of a multi-burst receiver is higher than conventional single-burst receivers. In general, as the receiver becomes more complex, its performance improves. However, there is a practical limit on how complex the receiver can be.

Embodiments of the invention may provide a minimum complexity architecture that retains most of the performance benefits mentioned above. The architecture may bridge the gap between single burst and multi-burst receivers. Furthermore, this architecture appears to perform very well with a realistic operational scenario and with the potential of approaching the theoretical capacity of the multiple access channel.

State-of-the-art fixed (e.g. DVBS2/RCS) or mobile satellite systems such as the Broadband Global Access Network (BGAN) and its aeronautical version Swiftbroadband system (SBB) use mostly orthogonal allocation schemes in frequency and time to simplify the transmission and reception technologies. The SBB return link is a typical example, where each aeronautical terminal transmits a burst of data always within a unique time/frequency slot. This, however, puts organizational and computational burden on the network controller. Embodiments of the invention provide a new type of multiple access which may improve the bandwidth efficiency and reduces the latency of modern satellite systems using highly redundant turbo coding and new receiver architecture.

One embodiment comprises a multi-burst receiver with a multiuser detector at the satellite access station capable of detecting more than one burst per time and frequency slot.

The scheme according to embodiments of the invention may use highly redundant turbo coded narrowband transmissions. For this reason the proposed multiple access scheme is named Turbo Code Division Multiple Access scheme (TCDMA). Joint accessing of spectrum using multiple-burst transmission and multiuser decoding strategies has the potential of significantly increasing the system capacity while reducing the overhead associated with network control functions and various signalling latencies. Complexity is transferred into the receiver, equipped with signal processing functions which can extract information streams from composite signals. With the rapid advances of VLSI technology multi-burst reception appears within reach of modern VLSI chips. The multi-burst receiver includes several sub-receivers and sub-decoders all operating several times until successful detection of the incoming bursts is achieved. The results reveal that the proposed technology nearly doubles the throughput over the conventional single burst receiver. In the random access mode, the application of multi-burst receivers may also eliminate collisions which in turn, may reduce the signalling latency of mobile terminals requesting system resources. There may be a significant increase in receiver complexity but the benefit is also very significant: the system access capacity increases with the number of successfully detected bursts.

### Brief Description of the Drawings

Specific embodiments of the present invention will now be described with reference to the accompanying drawings, identified below.
Figure 1 shows a time and frequency allocation scheme according to the state of the art.
Figure 2 shows a time and frequency allocation scheme according to an embodiment of the invention.
Figure 3 shows a TCDMA system model in an embodiment of the invention.
Figure 4 is a graph showing the AWGN performance of an embodiment of the invention.
Figure 5 is a diagram of a TCDMA multi-burst receiver in an embodiment of the invention.
Figure 6 is a graph of comparative throughput with different classes of receiver.
Figure 7 is a graph of packet error rate in an embodiment of the invention with a coding rate of 1/3.
Figure 8 is a graph of throughput in an embodiment of the invention with a coding rate of 1/5.
Figure 9 is a graph of packet error rate in the embodiment with a coding rate of 1/5.
Figure 10 shows an alternative embodiment of the invention with configurable timing and frequency uncertainty.
Figure 11 shows an alternative embodiment of the invention with configurable power and frequency uncertainty.
Figure 12 is a flowchart of the operation of a transmitter in an embodiment of the invention.
Figure 13 shows the burst design in an embodiment of the invention.

### Detailed Description of the Embodiments

### Joint Multiple Access Scheme

In a TDMA system in an embodiment of the invention, as shown in Figure 2 and in contrast to Figure 1, bursts B1...B4 are nominally aligned with respective time slots T1...T4, but are allowed to overlap between adjacent time slots, as shown by bursts B1 and B2 over time slots T1 and T2 and/or may occupy substantially the same time slot, as shown by bursts B3 and B4 substantially completing overlapping in timeslot T3. In other words, bursts are not mutually separated by time and/or frequency, but are allowed joint access to time and/or frequency channels. Nevertheless, the system may control joint access statistically, by controlling how transmitters select time and frequency channels for themselves, so that the receiver is likely to be able to decode each burst, using multi-burst decoding.

This scheme can significantly increase system capacity by increasing the energy density in the channel, while simultaneously reducing service latency and reducing the overheads associated with network control functions. Complexity is transferred from the signalling and control infrastructure into the receiver, this being equipped with enhanced signal processing techniques making possible to extract information streams from composite signals.

### System Model

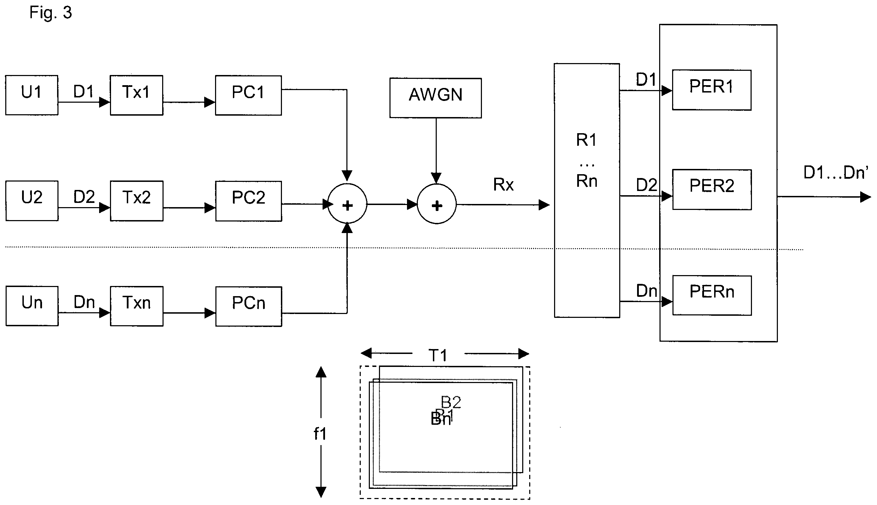

A system model in the embodiment is shown in Figure 3. There are up to n users U1...Un, each utilizing a respective transmitter Tx1...Txn for sending their respective data D1...Dn as corresponding data bursts. The radio resource management system allocates a single time/frequency slot T1, fl for all these users U1...Un to access the channel by transmitting the bursts in a random, on-demand fashion. In the case shown, all n users are transmitting bursts B1...Bn simultaneously in the time slot T1 and frequency channel fl.

The bursts have coding rates of R=1/2 or less, typically from R=1/3 down to R=1/9, and are generated by a parallel concatenated turbo encoder. The encoder may be defined by an extension of the CCSDS standard, for example as described in 'TM Synchronization and Channel Coding', CCSDS 131.0 B-1, September 2003. The turbo interleaver is as specified for the BGAN air interface and it is an improved version of the CCSDS standard optimized for small packet sizes, as described for example in P. Fines, E. Christofylaki, S. Papaharalabos and P. Febvre, "Low Rate Turbo Code Extensions and Modem Design for High Reliability Satellite Links", ESA TTC 2007.

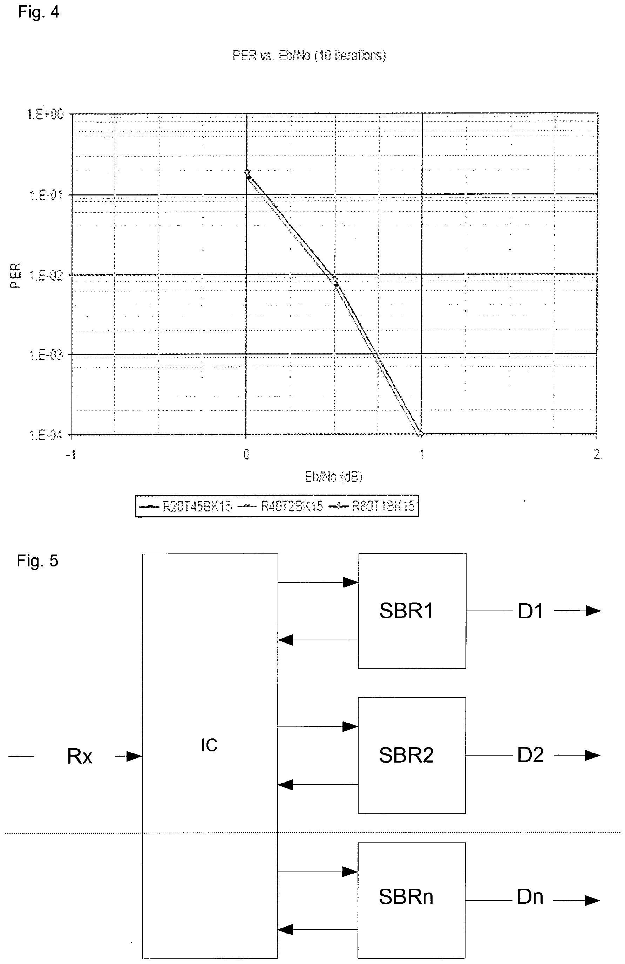

The turbo code performance depends on the coding rate and the data size and for R=1/5 and 504 data bits its AWGN performance is shown in Figure 4. In the bursts, the FEC symbols are interleaved with unique word (UW) symbols known at the receiver end. The receiver uses the UW symbols as pilots for demodulating each burst correctly.

The system may control the coding rate of the transmitters according to the anticipated or measured loading of the traffic channels, and/or the burst error rate measured at the receiver. The coding rate may be same for all transmitters, or may be selected on a per-transmitter basis, for example according to the measured burst error rate for the respective transmitter. The coding rate may be varied by transmitting periodic coding rate control signals addressed to individual transmitters, or broadcast to all transmitters.

Each transmission travels via a different propagation channel PC1...PCn which introduces random propagation characteristics such as different delay, attenuation, frequency shift, multipath fading and/or phase noise. The system has no specific means for ensuring signal orthogonality. However, it should be noted that each channel introduces some signature that is likely to be independent or different for each user by affecting at least some (if not all) of the previously mentioned signal parameters. This unique signature allows the bursts to be decoded separately at the receiver. The propagation channels also add noise to the transmissions, modelled in Figure 3 as additive Gaussian white noise (AWGN). The signal Rx received at the receiver therefore consists of heavily mutually interfering bursts and noise, which a conventional single user receiver may be unable to recover.

In the embodiment, the receiver comprises a multi-user receiver comprising a group of n receivers R1...Rn which exchange information in order to recover the data content of all the bursts simultaneously. As shown in Figure 5, the receiver comprises a group of n soft-in/soft-out single burst receivers SBR1...SBRn which feed their outputs back to an interactive interference canceller IC so as to aim to recover the respective data D1...Dn. In practice, only n' of the n data sets may be recovered.

The performance of the group of receivers is investigated below. Each user link is characterized by an individual Packet Error Rate (PER) counter. In every slot, there is a counter which measures how many user bursts have been received without errors (n users transmit and n' are received without errors). The statistical mean of n' is an indication of the receiver effectiveness assuming the type of multiple-access described above. With an ideal receiver n'=n for n=1, 2, ... in practice there is a threshold beyond which n'<n and n' approaches zero as n increases. The ratio n'/n is the effective throughput indicating the average number of successfully decoded bursts. Of course, when the bursts of n' terminals are decoded there is an average PER associated with each terminal. Due to the unscheduled nature of return transmissions and the satellite long round trip, transmission coordination in terms of timing, frequency and power may not be possible. Therefore, another requirement is that the multi-burst system should operate without the need of accurate power control. Timing and frequency may be estimated accurately if the terminal is able to determine its location relative to the satellite, for example using GPS. However, the proposed system capacity may be increased if the transmissions are not employing accurate timing, frequency and power.

The bursts preferably fall within the time slot and frequency boundaries for avoiding adjacent channel interference and their power is preferably limited so that extensive co-channel interference is also avoided in nearby spot beams. The propagation channel parameters may contain random elements that are unique for each burst, which may improve the overall capacity. On the other hand, accurate estimation of small disturbances may make demodulation more difficult and performance loss may be experienced.

### Performance Results

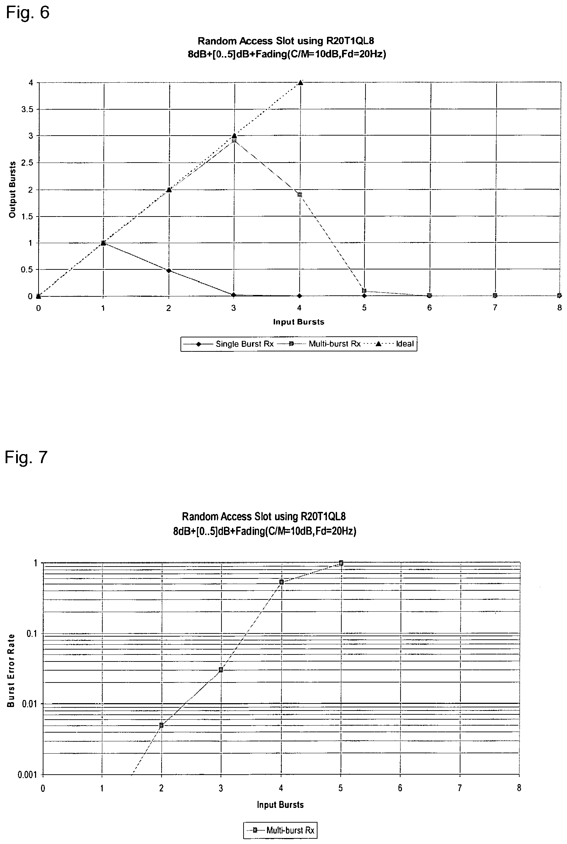

The results in this section are for 20 ms bursts with rate 1/3 turbo coding. The receiver throughput is presented in Figure 6 where all bursts have random power, time and frequency within the following ranges:
a) The Eb/No is random between 8 and 13 dB plus Rician fading with carrier to multipath power ratio C/M=10 dB and fading bandwidth Fd=20 Hz.
b) Timing uncertainty: uniform random 3 ms
c) Frequency uncertainty ±200 Hz

With a single burst receiver, the maximum throughput is of course 1 burst. When two bursts arrive in a single slot processed by a conventional single burst receiver, about a quarter of them are detected correctly on average, since the fading occasionally produces great energy difference between the two bursts and the strongest one can be decoded correctly. On the other hand, using a multi-burst receiver the average maximum throughput per slot is 3 bursts. The average PER is equivalent to the burst error rate shown in Figure 7. The PER curve indicates that the PER increases rapidly above 2 bursts per slot.

The receiver architecture may be a trade-off between complexity and performance aiming at a 'reasonable' complexity solution. Further results are presented assuming 80 ms bursts with rate 1/5 turbo coding and three types of receiver: The first type uses the UW for channel state estimation and demodulation (UW Receiver). This has moderate complexity and it is very similar to the conventional receiver. The second type uses a type of iterative receiver or Turbo receiver in which the demodulator and FEC decoder iterate exchanging information, as disclosed for example in J. Hamkins & D. Divsalar, "Coupled Receiver/Decoder for Low Rate Turbo Codes", ISIT, Yokohama, Japan, 2003. This receiver provides near optimum performance at the expense of higher complexity which scales according to channel conditions. Finally, the third type employs a perfect demodulator (Perfect Receiver). This is not practically realizable but sets the benchmark against which the implementation loss of the other two types mentioned above can be measured.

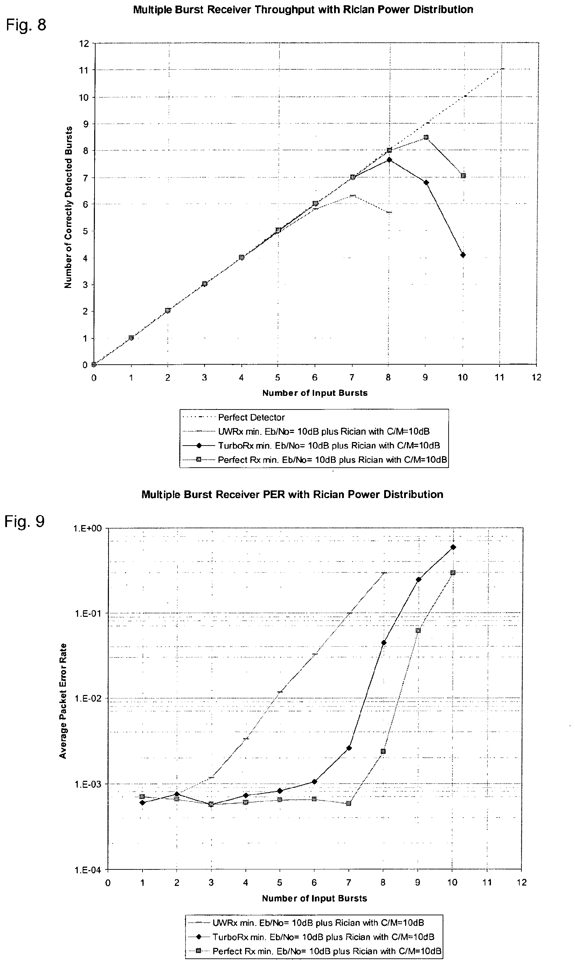

The receiver throughput is presented in Figure 8 where all bursts have random power, time and frequency within the following ranges:
a) Eb/No random in the range between 10 and 15 dB plus Rician fading with C/M=10 dB and fading bandwidth Fd=20 Hz.
b) Timing uncertainty: uniform random 3 ms
c) Frequency uncertainty ±200 Hz

It should be noted that the available Eb/No is extensive and well above the fading margin required. However, this is an example of how one can trade power for capacity. Using a multi-burst receiver the average throughput is shown in Figure 8. The maximum throughput is 9 bursts achieved with an ideal receiver. The average PER is shown in Figure 9. The PER curves indicate that the PER of the UW Receiver degrades rapidly as the number of bursts increase to more than 3. On the other hand, the Turbo Receiver approximates the performance of the Perfect Receiver. The UW Rx achieves remarkably good performance considering its low complexity. However, the Turbo receiver shows how well it can approximate the Perfect Receiver. Since the complexity of the Turbo Receiver is scalable, performance may be traded for complexity reduction.

### Controlled Interference

In the TCDMA embodiment described above, variations in power, time and frequency between the bursts transmitted by different terminals assist the receiver in discriminating between and successfully decoding the different bursts. Hence, in contrast with conventional methods, system performance may be improved by frequency and timing errors.This effect is enhanced by the transmitting terminals introducing a deliberate random waveform variation, such as a power variation δP, timing variation δt and/or frequency variation δf for each burst.

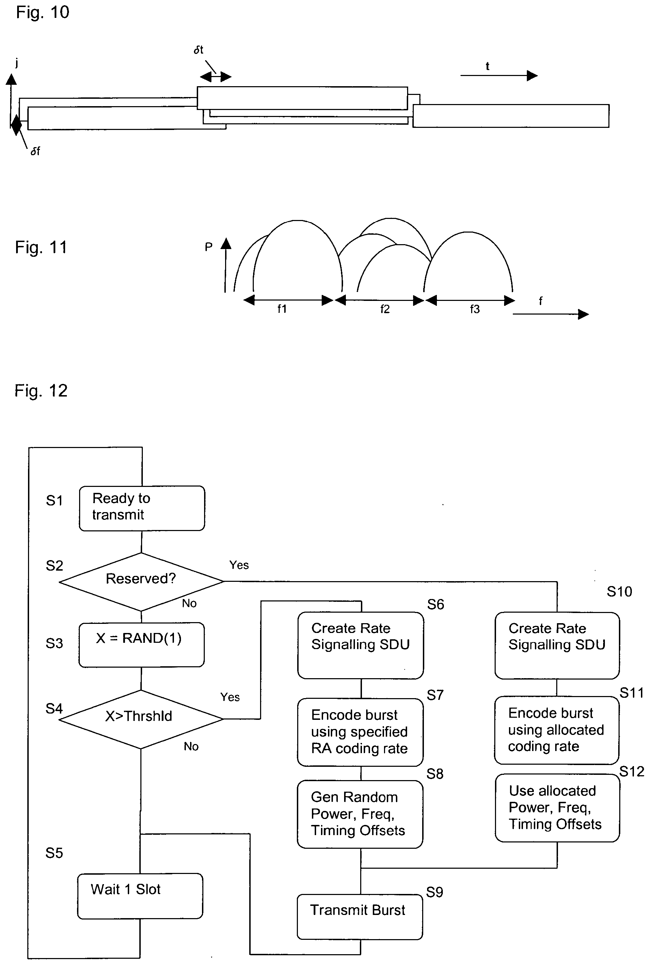

In one example, a terminal applies a random or pseudo-random timing variation of up to a predetermined fraction, such as 5-10%, of the burst duration. In another example, a terminal applies a random or pseudo-random frequency variation of up to a predetermined fraction, such as 10%-20%, of the burst bandwidth. Figure 10 shows the application of both a random frequency and a random timing variation to bursts. The maximum predetermined variation for time and/or frequency may be varied by the system and communicated to the terminals using a signalling protocol, so as to control the inter-slot and inter-channel interference respectively, while supporting improved intra-slot and intra-channel burst discrimination respectively.

Power uncertainty, caused for example by fading channel and random path loss, may also assist in discrimination between bursts. The power uncertainty may be enhanced by a transmitting terminal applying a random power variation to its bursts, with the maximum variation being varied by the system and communicated to the terminals using a signalling protocol in a similar fashion to the maximum timing and/or frequency variation described above with reference to Figure 10. Figure 11 shows an example of random power and frequency variations for multiple bursts from different terminals.

Where one burst is received with significantly higher power than other, interfering bursts, it may not be necessary to use a multi-user detection technique to decode the higher power burst; instead, this burst may be decoded using a simple single user decoder, with the other bursts being treated as noise. The decoded burst may then be subtracted from the received signal, and the remaining bursts may then be decoded by multi-user detection. In one embodiment, the high power bursts are transmitted to a conventional receiver, for example in a conventional system, and the low-power bursts are transmitted to an independent multi-user system that shares channels with the conventional system. In that case, the multi-user system does not need to decode the high power bursts, but merely identifies their characteristics sufficiently to be able to cancel them from the received signal prior to multi-user decoding.

The burst duration may be substantially equal to the time slot duration, unlike the embodiment shown in Figure 2, where each burst is approximately 10% shorter than the duration of the time slot. As a result, the bandwidth efficiency of transmissions is increased, at the expense of greater inter-slot interference.

### Transmitter Control Logic

Figure 12 shows a transmitter control method employed by a transmitting terminal in an embodiment of the invention. At step S1, the terminal has a burst that needs to be transmitted. At step S2, the terminal determines whether the system has allocated reserved return link capacity to the terminal. If not, the terminal waits a random number of slot periods, preferably from 0 to a threshold configurable by the system (steps S3 to S5), then proceeds to generate the burst as follows. First, the terminal generates a rate signalling service data unit (SDU), which indicates the encoding rate used in the burst (step S6). The terminal encodes the burst using the specified coding rate (step S7), generates the random power, frequency and/or timing offsets (step S8), and then transmits the burst (S9), including the SDU and the encoded data. Of course, steps S6 to S8 may be performed during or before waiting for the random number of slots (steps S3-S5).

If the terminal has been allocated specific time and frequency slots in the return link (step S2), the terminal does not wait a random number of slots but proceeds to generate the rate signalling SDU (S10), encode the burst using the specified coding rate (S11), which may have been specified by the system as part of the allocation, sets power, frequency and timing offsets allocated by the system (S12) and transmits the burst (S9).

### Shared Random Access and Reserved Allocations

In embodiments of the invention, scheduled and unscheduled (random access) communications can share return slots. In particular, terminals are permitted to transmit unscheduled signalling bursts, such as reservation requests, in time and frequency slots that are allocated to scheduled data communications. This allows much more efficient use of bandwidth compared to conventional systems in which channels, such as time slots and/or frequencies, are dedicated to unscheduled traffic. Sufficient bandwidth is conventionally allocated to such dedicated channels so as to maintain the probability of collisions below a certain level; hence, such conventional dedicated channels make very inefficient use of bandwidth. In contrast, in a system according to an embodiment of the present invention, there is little or no need for such dedicated channels; instead, unscheduled traffic shares bandwidth with scheduled traffic.

### Burst Design for Reserved Allocations

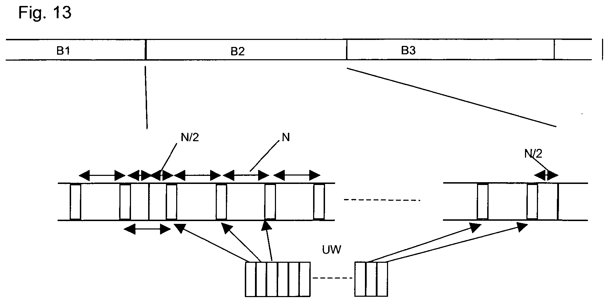

A terminal may be allocated a plurality of sequential slots for continuous transmissions. In this case, the burst design may be as shown in Figure 13. A transmitter-specific unique word (UW) is split into fragments and distributed with a constant symbol periodicity N within the transmitted bursts. Preferably, the first UW fragment is spaced N/2 from the beginning of the burst, and the last UW fragment is spaced N/2 from the end of the burst. Each UW fragment may comprise one or more symbols of the UW, and preferably most or all of the fragments within a burst comprise the same number of symbols. The constant periodicity N aids channel state estimation and tracking by the receiver. This is particularly important since unreserved bursts may be transmitted in the same nominal time slots and frequencies as the reserved bursts.

A similar burst structure may also be applied to unreserved bursts, with similar advantages at the expense of reduced bandwidth efficiency.

As an alternative to the distributed UW, pilot symbols may be distributed periodically into the bursts; pilot symbols are typically not unique to each transmitter and are therefore less able to assist with discrimination between bursts, but nevertheless assist in tracking the channel state.

In a continuous transmission, a transmitter may re-order the bursts prior to transmission such that data bits and related parity bits are spaced apart by more than one burst; in other words, they are not in adjacent bursts. This may reduce the sensitivity of the transmission to burst noise, but increases the latency of transmissions.

### Multiple bursts per transmitter

In the above embodiments, it has been assumed that each of a plurality of bursts that occupy the same time slot is from a different transmitter, but this is not essential; the same transmitter may transmit multiple bursts in the same time slot if the bursts have sufficiently different waveform or propagation characteristics. In the former case, the transmitter may apply a frequency, timing and/or power offset between the bursts; this offset need not be random, but may be selected to ensure a sufficient offset. In the latter case, the transmitter may have a plurality of antennas exhibiting spatial, polarisation or other diversity so that the propagation characteristics from each antenna can be discriminated at the receiver, and may transmit a different burst from each antenna. The multiple bursts may each have a different data content, so that the transmission rate of the transmitter is increased.

### Alternative Embodiments

Although at least some of the above embodiments have been described with reference to a satellite communications system, aspects of the invention are applicable to other types of wireless communication system, such as terrestrial communications systems. The embodiments may be applied to transmission and reception on a return link i.e. to transmissions from wireless terminals to a central receiver, but are more generally applicable to wireless multiple access systems. It is presently preferred that the receiver architecture be centralised due to the complexity of the receiver, but it is likely that such complexity could be introduced into user terminals in the near future, with predicted increases in processor power and reductions in processor cost and size. In that case, aspects of the invention could be applied to decentralised multiple access systems such as Aloha, wireless mesh networks and the like.

Although turbo codes are used in the preferred embodiments, other FEC (forward error correction) codes may be used. Parallel concatenated turbo codes are currently preferred because of their near-ideal coding performance, their ability to perform at very low coding rates, and their applicability to soft-in/soft-out decoding. Other high-performance codes such as serial concatenated turbo codes and low-density parity codes (LDPC) do not satisfy all of these requirements; however, were other codes to be discovered that satisfy these requirements, they would also be applicable in embodiments of the present invention.

## Claims

1. A method of operating a wireless communication system in which at least first and second narrowband transmissions (B1...Bn) are transmitted from one or more transmitters (Tx1...Txn) to a receiver (R1...Rn) over a wireless multiple access return link, such that said receiver (R1...Rn) receives mutually interfering said first and second transmissions (B1...Bn) and decodes said first and second transmissions (B1...Bn); wherein said first and second transmissions (B1...Bn) are each forward error correction, FEC, encoded; **characterised in that** the one or more transmitters (Tx1...Txn) apply a random or pseudo-random offset to one or more of the frequency, timing and power of at least one of said first and second transmissions (B1...Bn) such that at least one of the first and second transmissions arrive at the receiver (R1...Rn) with random or pseudo-random offset frequency, timing and/or power such that the first and second transmissions can be decoded by the receiver (R1...Rn).

2. The method of claim 1, wherein the one or more transmitters are arranged to vary the degree of said random or pseudo-random offset.

3. The method of claim 2, wherein the degree of said offset is controlled by a signalling protocol for communication with the respective transmitter.

4. The method of any preceding claim, wherein the first transmission is a scheduled transmission and the second transmission is an unscheduled burst transmission.

5. The method of any preceding claim, wherein the channel of the second transmission is selected randomly or pseudo-randomly.

6. The method of any preceding claim, wherein at least one of said first and second transmissions includes acquisition symbols distributed through said transmission.

7. A wireless communication system comprising one or more wireless transmitters arranged to communicate with a receiver over a wireless multiple access return link, and arranged to transmit a plurality of FEC encoded first and second narrowband transmissions with substantially the same timing and frequency but with mutually different waveform and/or propagation characteristics such that the receiver is able to decode said first and second transmissions, **characterised in that** the one or more transmitters are arranged to apply a random or pseudo-random offset to one or more of the frequency, timing and/or power of at least one of said first and second transmissions.

8. The system of claim 7, wherein the one or more transmitters (Tx1...Txn) are arranged to vary the degree of said random or pseudo-random offset.

9. The system of claim 8, wherein the degree of said offset is controlled by a signalling protocol for communication with the respective transmitter.

10. The system of any one of claims 7 to 9, wherein the first transmission is a scheduled transmission and the second transmission is an unscheduled burst transmission.

11. The system of any one of claims 7 to 10, wherein at least one of said first and second transmissions includes acquisition symbols distributed through said transmission.

## Patentansprüche

1. Verfahren zum Betreiben eines drahtlosen Kommunikationssystems, bei dem mindestens erste und zweite Schmalbandsendungen (B1...Bn) von einem oder mehreren Sendern (Tx1...Txn) über eine drahtlose Mehrfachzugriffsrückverbindung zu einem Empfänger (R1...Rn) übertragen werden, so dass der genannte Empfänger (R1...Rn) die genannte erste und zweite Sendung (B1...Bn), die sich gegenseitig stören, empfängt und die erste und zweite Sendung (B1...Bn) decodiert; wobei die genannte erste und zweite Sendung (Bl... Bn) jeweils FEC-(Vorwärtsfehlerkorrektur)-encodiert sind; **dadurch gekennzeichnet, dass** die ein oder mehreren Sender (Tx1...Txn) einen zufälligen oder pseudozufälligen Versatz auf eines oder mehrere aus Frequenz, Timing und Leistung der ersten und/oder zweiten Sendung (B1.. Bn) anwenden, so dass die erste und/oder zweite Sendung am Empfänger (R1...Rn) mit einer/m zufälligen oder pseudozufälligen Versatzfrequenz, Timing und/oder Leistung ankommen, so dass die erste und zweite Sendung vom Empfänger (R1...Rn) decodiert werden können.

2. Verfahren nach Anspruch 1, wobei die ein oder mehreren Sender zum Variieren des Grades des genannten zufälligen oder pseudozufälligen Versatzes ausgelegt sind.

3. Verfahren nach Anspruch 2, wobei der Grad des genannten Versatzes durch ein Signalisierungsprotokoll zur Kommunikation mit dem jeweiligen Sender gesteuert wird.

4. Verfahren nach einem vorherigen Anspruch, wobei die erste Sendung eine planmäßige Sendung und die zweite Sendung eine außerplanmäßige Burst-Sendung ist.

5. Verfahren nach einem vorherigen Anspruch, wobei der Kanal der zweiten Sendung zufällig oder pseudozufällig ausgewählt wird.

6. Verfahren nach einem vorherigen Anspruch, wobei die genannte erste und/oder zweite Sendung Erfassungssymbole enthalten, die über die genannte Sendung verteilt sind.

7. Drahtloses Kommunikationssystem, das einen oder mehrere drahtlose Sender umfasst, die zum Kommunizieren mit einem Empfänger über eine drahtlose Mehrfachzugriffsrückverbindung und so ausgelegt sind, dass sie mehrere FEC-codierte erste und zweite Schmalbandsendungen mit im Wesentlichen dem/r gleichen Timing und Frequenz, aber mit voneinander unterschiedlichen Wellenform- und/oder Ausbreitungscharakteristiken übertragen, so dass der Empfänger die genannte erste und zweite Sendung decodieren kann, **dadurch gekennzeichnet, dass** die ein oder mehreren Sender zum Anwenden eines zufälligen oder pseudozufälligen Versatzes auf eine oder mehrere aus Frequenz, Timing und/oder Leistung der ersten und/oder zweiten Sendung ausgelegt sind.

8. System nach Anspruch 7, bei dem die ein oder mehreren Sender (Txl ...Txn) zum Variieren des Grades des genannten zufälligen oder pseudozufälligen Versatzes ausgelegt sind.

9. System nach Anspruch 8, wobei der Grad des genannten Versatzes durch ein Signalisierungsprotokoll zur Kommunikation mit dem jeweiligen Sender gesteuert wird.

10. System nach einem der Ansprüche 7 bis 9, wobei die erste Sendung eine planmäßige Sendung und die zweite Sendung eine außerplanmäßige Burst-Sendung ist.

11. System eines der Ansprüche 7 bis 10, wobei die genannte erste und/oder zweite Sendung Erfassungssymbole enthalten, die über die genannte Sendung verteilt sind.

## Revendications

1. Procédé de fonctionnement d'un système de communication sans fil dans lequel au moins de première et seconde transmissions à bande étroite (B1...Bn) sont transmises à partir d'un ou de plusieurs émetteurs (Tx1...Txn) vers un récepteur (R1... Rn) sur une liaison de retour à accès multiple sans fil, de telle sorte que ledit récepteur (R1... Rn) reçoit lesdites première et seconde transmissions (B1..Bn) mutuellement interférentes et décode lesdites première et seconde transmissions (B1...Bn) ; dans lequel lesdites première et seconde transmissions (B1..Bn) sont chacune codées pour une correction aval d'erreurs, FEC ; **caractérisé en ce que** les un ou plusieurs émetteurs (Tx1...Txn) appliquent un décalage aléatoire ou pseudo-aléatoire à une ou plusieurs de la fréquence, de la temporisation et de la puissance d'au moins une desdites première et seconde transmissions (B1..Bn) de telle sorte qu'au moins une des première et seconde transmissions arrivent au niveau du récepteur (R1...Rn) avec une fréquence, une temporisation et/ou une puissance à décalage aléatoire ou pseudo-aléatoire de telle sorte que les première et seconde transmissions peuvent être décodées par le récepteur (R1...Rn).

2. Procédé selon la revendication 1, dans lequel les un ou plusieurs émetteurs sont agencés pour varier le degré dudit décalage aléatoire ou pseudo-aléatoire.

3. Procédé selon la revendication 2, dans lequel le degré dudit décalage est commandé par un protocole de signalisation pour une communication avec l'émetteur respectif.

4. Procédé selon l'une quelconque des revendications précédentes, dans lequel la première transmission est une transmission planifiée et la seconde transmission est une transmission à impulsions non planifiée.

5. Procédé selon l'une quelconque des revendications précédentes, dans lequel le canal de la seconde transmission est sélectionné de manière aléatoire ou pseudo-aléatoire.

6. Procédé selon l'une quelconque des revendications précédentes, dans lequel au moins une desdites première et seconde transmissions inclut des symboles d'acquisition distribués par le biais de ladite transmission.

7. Système de communication sans fil comprenant un ou plusieurs émetteurs sans fil agencés pour communiquer avec un récepteur sur une liaison de retour à accès multiple sans fil, et agencés pour transmettre une pluralité de première et seconde transmissions à bande étroite codées pour une FEC avec sensiblement les mêmes temporisation et fréquence mais avec des caractéristiques de forme d'onde et/ou de propagation mutuellement différentes de telle sorte que le récepteur est capable de décoder lesdites première et seconde transmissions, **caractérisé en ce que** les un ou plusieurs émetteurs sont agencés pour appliquer un décalage aléatoire ou pseudo-aléatoire à une ou plusieurs de la fréquence, de la temporisation et/ou de la puissance d'au moins une desdites première et seconde transmissions.

8. Système selon la revendication 7, dans lequel les un ou plusieurs émetteurs (Tx1... Txn) sont agencés pour varier le degré dudit décalage aléatoire ou pseudo-aléatoire.

9. Système selon la revendication 8, dans lequel le degré dudit décalage est commandé par un protocole de signalisation pour une communication avec l'émetteur respectif.

10. Système selon l'une quelconque des revendications 7 à 9, dans lequel la première transmission est une transmission planifiée et la seconde transmission est une transmission à impulsions non planifiée.

11. Système selon l'une quelconque des revendications 7 à 10, dans lequel au moins une desdites première et seconde transmissions inclut des symboles d'acquisition distribués par le biais de ladite transmission.
